# EUROPEAN PATENT APPLICATION

(11) **EP 4 790 757 A1**
(43) Date of publication of application: **12.08.2026**
(21) Application number: 26157674.8
(22) Date of filing: 10.02.2026
(51) Int. Cl.: H01M 4/131, H01M 4/36, H01M 4/525, H01M 10/052

(54) **CATHODE ACTIVE MATERIAL FOR LITHIUM SECONDARY BATTERY, METHOD FOR PREPARING THE SAME AND LITHIUM SECONDARY BATTERY INCLUDING THE SAME**

(30) Priority: 11.02.2025 KR 20250017360; 09.02.2026 KR 20260025790
(71) Applicant: SK On Co., Ltd., Seoul 03161 (KR)
(72) Inventor: LEE, Ha Eun, 34124 Daejeon (KR); KIM, Sang Bok, 34124 Daejeon (KR); KIM, Sung Beom, 34124 Daejeon (KR); PARK, Sang Min, 34124 Daejeon (KR); LIM, Woo Seob, 34124 Daejeon (KR); CHOI, Jae Ho, 34124 Daejeon (KR)
(74) Representative: Prüfer & Partner mbB Patentanwälte · Rechtsanwälte

(57) **Abstract**

A cathode active material for a lithium secondary battery according to embodiments of the present disclosure includes first lithium transition metal oxide particles and second lithium transition metal oxide particles having a median particle diameter (D50) smaller than that of the first lithium transition metal oxide particles. The first lithium transition metal oxide particles and the second lithium transition metal oxide particles each include a lithium-sulfur-metal-containing part and satisfy predetermined relationships of a particle diameter ratio and a sulfur coating amount difference therebetween.

## Description

### [BACKGROUND OF THE INVENTION]

### 1. Field of the Invention

The disclosure of the present application relates to a cathode active material for a lithium secondary battery, a method for preparing the same, and a lithium secondary battery including the cathode active material.

### 2. Description of the Related Art

A secondary battery is a battery that can be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, battery packs including the secondary battery have also been developed and applied to eco-friendly automobiles such as electric vehicles and hybrid vehicles as their power sources.

Examples of the secondary batteries may include a lithium secondary battery, a nickelcadmium battery, a nickel-hydrogen battery and the like. Among them, the lithium secondary battery has a high operating voltage and a high energy density per unit weight, making it advantageous in terms of charging speed and weight reduction, such that development thereof is progressing in this regard.

As the application range of lithium secondary batteries expands, longer cycle life, higher capacity, and improved operational stability are required. For example, the output characteristics and cycle life characteristics of the lithium secondary battery may deteriorate due to side reactions between a cathode active material and an electrolyte in the lithium secondary battery.

### [SUMMARY OF THE INVENTION]

According to an aspect of the present disclosure, it is an object to provide a cathode active material for a lithium secondary battery having improved output characteristics and cycle life characteristics.

According to an aspect of the present disclosure, it is another object to provide a method for preparing a cathode active material for a lithium secondary battery having improved output characteristics and cycle life characteristics.

According to an aspect of the present disclosure, it is yet another object to provide a lithium secondary battery having improved output characteristics and cycle life characteristics.

A cathode active material for a lithium secondary battery according to exemplary embodiments of the present disclosure includes first lithium transition metal oxide particles and second lithium transition metal oxide particles having a median particle diameter (D50) smaller than that of the first lithium transition metal oxide particles, wherein the first lithium transition metal oxide particles and the second lithium transition metal oxide particles each include a lithium-sulfur-metal-containing part and satisfy Equations 1 and 2 below.$5 A - 15 < B \left(%\right) < 5 A + 5$

In Equation 1, A denotes a ratio of the median particle diameter (D50) of the first lithium transition metal oxide particles to the median particle diameter (D50) of the second lithium transition metal oxide particles, and B denotes a difference in sulfur coating amount (%) defined by Equation 2 below.$B = \left\{\left(Y-X\right)/X\right\} \times 100$

In Equation 2, X denotes a sulfur content (ppm) based on the total weight of the first lithium transition metal oxide particles, and Y denotes a sulfur content (ppm) based on the total weight of the second lithium transition metal oxide particles.

In some embodiments, the sulfur content based on the total weight of the first lithium transition metal oxide particles may be 3,000 ppm to 6,000 ppm, and the sulfur content based on the total weight of the second lithium transition metal oxide particles may be 3,000 ppm to 6,000 ppm.

In some embodiments, the median particle diameter (D50) of the first lithium transition metal oxide particles may be greater than 10 µm and less than 18 µm.

In some embodiments, the median particle diameter (D50) of the second lithium transition metal oxide particles may be greater than 2 µm and less than 5 µm.

In some embodiments, the ratio (A) of the median particle diameter (D50) of the first lithium transition metal oxide particles to the median particle diameter (D50) of the second lithium transition metal oxide particles may be 3.5 to 6.5.

In some embodiments, the first lithium transition metal oxide and the second lithium transition metal oxide may each be represented by Formula 1 below:

[Formula 1] LiₐNiₓM₁₋ₓO_{2+y}

In Formula 1, 0.95≤a≤1.08, x≥0.5, and -0.1≤y≤0.1, and M includes at least one element selected from S, Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Sr.

In some embodiments, the content of the first lithium transition metal oxide based on the total weight of the cathode active material for a lithium secondary battery may be 70% by weight to 90% by weight.

In some embodiments, the content of the second lithium transition metal oxide based on the total weight of the cathode active material for a lithium secondary battery may be 10% by weight to 30% by weight.

In some embodiments, the lithium-sulfur-metal-containing part may include at least one selected from the group consisting of Al, Ti, Zr, W, Sr, Ba, Ta, Nb, Mo, K, B and Na.

A lithium secondary battery according to exemplary embodiments of the present disclosure includes: a cathode including the above-described cathode active material for a lithium secondary battery; and an anode disposed opposite the cathode.

A method for preparing a cathode active material for a lithium secondary battery according to exemplary embodiments of the present disclosure includes: preparing preliminary lithium transition metal oxide particles; dry mixing the preliminary lithium transition metal oxide particles, a metal oxide, and a sulfur compound to form a mixture; introducing a solvent to the mixture and drying to form a preliminary lithium-sulfur-metal-containing part on the preliminary lithium transition metal oxide particles; and calcining the preliminary lithium transition metal oxide particles on which the preliminary lithium-sulfur-metal-containing part is formed at a temperature higher than a drying temperature to form lithium transition metal oxide particles including a lithium-sulfur-metal-containing part.

In some embodiments, the metal oxide may include at least one selected from the group consisting of Al₂O₃, TiO₂, Ti₂O₃, ZrO₂, B₂O₃, SrO₂, SrAl₂O₄, SrTiO₃, SrWO₄, BaO, WO₃, (NH₄)₁₀H₂(W₂O₇)₆, MgO, Ta₂O₅, Nb₂O₅, MoO₃, H₄[W₁₂SiO₄₀], H₄SiO₄·12MoO₃, and (NH₄)₂MoO₄.

In some embodiments, the sulfur compound may include at least one selected from the group consisting of (NH₄)₂SO₄, HSO₃NH₂, NH₄SO₃NH₂, Al₂(SO₄)₃, AlK(SO₄)₂, Al(NH₄)(SO₄)₂, Ti(SO₄)₂, TiOSO₄, and SrSO₄.

In some embodiments, the drying may be performed at a temperature in a range of 110 °C to 240 °C.

In some embodiments, the calcination may be performed at a temperature in a range of 300 °C to 500 °C.

According to an embodiment of the present disclosure, impurities on the surface of the cathode active material may be reduced, and the capacity characteristics and cycle life characteristics of the lithium secondary battery may be improved.

According to an embodiment of the present disclosure, the cycle life characteristics and high-temperature storage characteristics of the lithium secondary battery may be improved, and gas generation may be reduced.

The cathode active material for a lithium secondary battery of the present disclosure and the lithium secondary battery including the same may be widely applied in green technology fields, such as electric vehicles, battery charging stations, as well as solar power generation, wind power generation, and the like, which use the batteries. The cathode active material for a lithium secondary battery of the present disclosure and the lithium secondary battery including the same may be used in eco-friendly electric vehicles, hybrid vehicles, and the like, which aim to prevent climate change by suppressing air pollution and greenhouse gas emissions.

### [BRIEF DESCRIPTION OF THE DRAWINGS]

The above and other objects, features and advantages of the present disclosure will be more clearly understood from the following detailed description taken in conjunction with the accompanying drawings, in which:
FIG. 1 is a process flowchart for describing a method for preparing a cathode active material according to exemplary embodiments; and
FIGS. 2 and 3 are a schematic plan view and a schematic cross-sectional view, respectively, illustrating a lithium secondary battery according to exemplary embodiments.

### [DETAILED DESCRIPTION OF THE INVENTION]

Embodiments according to the disclosure of the present application provide a cathode active material for a lithium secondary battery that includes a coating element (hereinafter, also abbreviated as a "cathode active material"). In addition, a method for preparing the cathode active material and a lithium secondary battery that includes the cathode active material (hereinafter, also abbreviated as a "secondary battery") are provided.

Hereinafter, exemplary embodiments of the present disclosure will be described in detail with reference to the accompanying drawings.

In one embodiment, the term "lithium transition metal oxide particles" refers to both first lithium transition metal oxide particles and second lithium transition metal oxide particles, unless the first lithium transition metal oxide particles or the second lithium transition metal oxide particles are separately and explicitly specified.

In one embodiment, the term "sulfur-containing compound" may be used interchangeably with a "sulfur compound."

In one embodiment, the cathode active material for a lithium secondary battery includes first lithium transition metal oxide particles and second lithium transition metal oxide particles having a median particle diameter (D50) smaller than that of the first lithium transition metal oxide particles, and the first lithium transition metal oxide particles and the second lithium transition metal oxide particles each include a lithium-sulfur-metal-containing part.

According to embodiments of the present disclosure, by each including the lithium-sulfur-metal-containing part, the first lithium transition metal oxide particles and the second lithium transition metal oxide particles may suppress side reactions with an electrolyte while maintaining stability of a layered structure of the lithium transition metal oxide particles.

In one embodiment, the fact that the first lithium transition metal oxide particles and the second lithium transition metal oxide particles each include a lithium-sulfur-metal-containing part or include sulfur means that sulfur (S) is coated on the surface of the lithium transition metal oxide particles. For example, this may mean that sulfur is coated on the surface of a crystal structure of the lithium transition metal oxide particles.

When sulfur is coated on lithium transition metal oxide particles having a single median particle diameter (D50) using a semi-dry coating method, the filling ratio of the cathode active material may be lowered. In addition, when an electrode is fabricated using a cathode active material that includes only lithium transition metal oxides having a single median particle diameter (D50), a high pressure needs to be applied to an electrode mixture layer to achieve a high composite density. In this case, local stress may be generated in active material particles, which may lead to breakage thereof and deterioration of electrode characteristics.

However, the cathode active material according to the present disclosure includes first lithium transition metal oxide particles and second lithium transition metal oxide particles having different median particle diameters (D50), thereby further enhancing the filling ratio. In addition, when an electrode is fabricated using the cathode active material according to the present disclosure, a well-packed electrode mixture layer is formed, thereby improving the output characteristics of the lithium secondary battery.

In one embodiment, a weight ratio of the first lithium transition metal oxide particles to the second lithium transition metal oxide particles may be 7:3 to 9:1.

In one embodiment, the weight ratio of the first lithium transition metal oxide particles to the second lithium transition metal oxide particles may be 7.1:2.9 to 8.1:1.9, 7.5:2.5 to 8.5:1.5, or 7.8:2.2 to 8.8:1.2.

When the weight ratio of the first lithium transition metal oxide particles to the second lithium transition metal oxide particles falls within the above-described range, an electrode mixture layer is effectively formed during electrode fabrication, thereby improving the output characteristics of a lithium secondary battery.

Meanwhile, when the cathode active material is prepared using a non-washing process, mixing of a sulfur-containing compound for sulfur coating is less effective than in a washing process. Since the non-washing process involves adding a coating solution to a large amount of cathode active material and then mixing the same, the second lithium transition metal oxide particles, which have a large specific surface area and a median particle diameter (D50) smaller than that of the first lithium transition metal oxide particles, tend to agglomerate. In other words, the second lithium transition metal oxide particles are less effectively sulfur-coated and tend to agglomerate than the first lithium transition metal oxide particles, which have a smaller specific surface area.

The method for preparing a cathode active material according to the present disclosure uses a dry method in which a sulfur-containing compound is mixed with preliminary lithium transition metal oxide particles and a metal oxide to form a mixture, followed by addition of a solvent, so that second lithium transition metal oxide particles having a large specific surface area and a median particle diameter (D50) smaller than that of the first lithium transition metal oxide particles do not agglomerate, and uniformity of sulfur coating on surface of the second lithium transition metal oxide particles is improved.

In one embodiment, the cathode active material for a lithium secondary battery includes first lithium transition metal oxide particles and second lithium transition metal oxide particles having a median particle diameter (D50) smaller than that of the first lithium transition metal oxide particles, wherein the first lithium transition metal oxide particles and the second lithium transition metal oxide particles each include a lithium-sulfur-metal-containing part and satisfy Equations 1 and 2 below.$5 A - 15 < B \left(%\right) < 5 A + 5$

In Equation 1, A denotes a ratio of the median particle diameter (D50) of the first lithium transition metal oxide particles to the median particle diameter (D50) of the second lithium transition metal oxide particles, and B denotes a difference in sulfur coating amount (%) defined by Equation 2 below.$B = \left\{\left(Y-X\right)/X\right\} \times 100$

In Equation 2, X denotes a sulfur content (ppm) based on the total weight of the first lithium transition metal oxide particles, and Y denotes a sulfur content (ppm) based on the total weight of the second lithium transition metal oxide particles.

When the cathode active material for a lithium secondary battery satisfies Equations 1 and 2, residual lithium may be sufficiently reduced, thereby improving high-temperature cycle life capacity retention of the lithium secondary battery and reducing gas generation.

In one embodiment, the term "median particle diameter (D50)" may refer to the particle diameter corresponding to 50% in the cumulative volume-based particle size distribution. The cumulative volume-based particle size distribution may be measured using a laser diffraction method. For example, the cathode active material particles may be dispersed in a dispersion medium and then introduced into a commercially available laser diffraction particle size analyzer (e.g., Microtrac MT 3500), and the particle size distribution may be calculated by measuring differences in diffraction patterns according to particle size as the particles pass through a laser beam.

In one embodiment, the sulfur content based on the total weight of the first lithium transition metal oxide particles may be 3,000 ppm to 6,000 ppm, and the sulfur content based on the total weight of the second lithium transition metal oxide particles may be 3,000 ppm to 6,000 ppm.

In one embodiment, the sulfur content based on the total weight of the first lithium transition metal oxide particles may be 3,100 ppm to 5,900 ppm, 3,300 ppm to 5,800 ppm, or 3,500 ppm to 5,000 ppm.

In one embodiment, the sulfur content based on the total weight of the second lithium transition metal oxide particles may be 3,100 ppm to 5,900 ppm, 3,500 ppm to 5,800 ppm, or 4,000 ppm to 5,500 ppm.

Within the above range, the lithium-sulfur-metal-containing part may be sufficiently formed, while capacity characteristics of the lithium secondary battery may be maintained or improved.

The sulfur (S) content may be measured using CS (carbon/sulfur) analysis. For example, the sulfur (S) content may be measured using a commercially available CS analyzer (e.g., CS844, manufactured by LECO). Specifically, lithium transition metal oxide particles may be divided into small portions and introduced into a ceramic crucible together with a combustion aid and iron chips at a ratio of 1:1, and combustion may be carried out in a high-frequency induction device while oxygen is supplied. Sulfur oxide-based inorganic compound gas generated by the combustion is then passed through an infrared detection cell to measure the sulfur content. At this time, the sulfur content of the lithium transition metal oxide particles may be quantitatively detected by measuring a change in infrared absorption relative to a blank.

In one embodiment, the median particle diameter (D50) of the first lithium transition metal oxide particles is greater than 10 µm and less than 18 µm.

In one embodiment, the median particle diameter (D50) of the first lithium transition metal oxide particles is 10.1 µm or more and 17.9 µm or less, 10.5 µm or more and 17.5 µm or less, or 11 µm or more and 17 µm or less.

When the median particle diameter of the first lithium transition metal oxide particles falls within the above-described range, voltage drop may be effectively suppressed.

In one embodiment, the median particle diameter (D50) of the second lithium transition metal oxide particles is greater than 2 µm and less than 5 µm.

In one embodiment, the median particle diameter (D50) of the second lithium transition metal oxide particles is 2.2 µm or more and 4.5 µm or less, 2.5 µm or more and 4.3 µm or less, or 3 µm or more and 4 µm or less.

When the median particle diameter of the second lithium transition metal oxide particles falls within the above-described range, voltage drop may be effectively suppressed.

In one embodiment, a ratio (A) of the median particle diameter (D50) of the first lithium transition metal oxide particles to the median particle diameter (D50) of the second lithium transition metal oxide particles is 3.5 to 6.5.

In exemplary embodiments, the ratio (A) of the median particle diameter (D50) of the first lithium transition metal oxide particles to the median particle diameter (D50) of the second lithium transition metal oxide particles is 3.5 to 6, 3.6 to 5.9, or 3.7 to 5.7.

When the ratio (A) of the median particle diameter (D50) of the first lithium transition metal oxide particles to the median particle diameter (D50) of the second lithium transition metal oxide particles falls within the above-described range, the filling ratio of the cathode active material may be improved.

In one embodiment, the first lithium transition metal oxide and the second lithium transition metal oxide are each represented by Formula 1 below.

[Formula 1] LiₐNiₓM₁₋ₓO_{2+y}

In Formula 1, a, x and y may satisfy 0.95≤a≤1.08, x≥0.5, and -0.1≤y≤0.1, and M may include at least one element selected from S, Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Sr.

In one embodiment, in Formula 1, x may satisfy x≥0.6, x≥0.7, x≥0.8, or x≥0.85.

The chemical structure represented by Formula 1 indicates a bonding relationship among elements included in a layered structure or a crystal structure of the cathode active material or the lithium transition metal oxide particles, and does not exclude the presence of additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element that contributes to the capacity/output activity of the cathode active material together with Co or Mn, such as Al.

In exemplary embodiments, the first lithium transition metal oxide may further include at least one of nickel (Ni), cobalt (Co) and manganese (Mn). For example, the first lithium transition metal oxide may include nickel (Ni), cobalt (Co) and manganese (Mn).

In exemplary embodiments, the second lithium transition metal oxide may further include at least one of aluminum (Al) and tungsten (W). For example, the second lithium transition metal oxide may include aluminum (Al) and tungsten (W).

The cathode active material may further include a doping element. For example, elements that are substantially identical or similar to the above-described auxiliary elements may be used as doping elements. For example, one or more of the above-described elements may be used alone or in combination as the doping element.

The doping element may be present on the surface of the lithium transition metal oxide particles, or may penetrate through the surface of the lithium transition metal oxide particles to be incorporated into the bonding structure represented by Formula 1.

In some embodiments, the lithium transition metal oxide particle may include a secondary particle formed by agglomeration of a plurality of primary particles, and the lithium-sulfur-metal-containing part may be located between the primary particles or on the surface of the secondary particle.

The term "secondary particle" as used herein may refer to a particle in which a plurality of primary particles are agglomerated and merged into a substantially single particle. For example, 10 or more, 20 or more, 30 or more, 40 or more, 50 or more, or 100 or more primary particles may be agglomerated within a single secondary particle. For example, a particle size of each of the primary particles included within a single secondary particle may be less than 1 µm, 900 nm or less (e.g., 50 nm to 900 nm, 100 nm to 900 nm), 800 nm or less, 600 nm or less, or 500 nm or less.

For example, the lithium-sulfur-metal-containing part may be formed by the combining residual lithium, sulfur, and metal elements present between the primary particles of the lithium transition metal oxide particles or on the surface of the secondary particles. The lithium-sulfur-metal-containing part may have higher structural stability compared to impurities (e.g., residual lithium). Accordingly, impurities on the surface of the lithium transition metal oxide particles may be reduced, thereby improving capacity and cycle life characteristics of the lithium secondary battery. For example, the residual lithium may include lithium hydroxide (LiOH), lithium carbonate (Li₂CO₃) and the like.

In some embodiments, the primary particles present at a surface portion of the lithium transition metal oxide particles may have a hexagonal close-packed structure. Accordingly, even within a limited space, a large amount of lithium and transition metal elements may be included in a stable layered structure, thereby improving capacity characteristics and cycle life characteristics of the lithium secondary battery.

In one embodiment, the content of the first lithium transition metal oxide based on the total weight of the cathode active material for a lithium secondary battery is 70% by weight ("wt%") to 90 wt%.

In one embodiment, the content of the first lithium transition metal oxide based on the total weight of the cathode active material for a lithium secondary battery may be 71 wt% to 88 wt%, 75 wt% to 85 wt%, or 78 wt% to 81 wt%.

In one embodiment, the content of the second lithium transition metal oxide based on the total weight of the cathode active material for a lithium secondary battery is 10 wt% to 30 wt%.

In one embodiment, the content of the second lithium transition metal oxide based on the total weight of the cathode active material for a lithium secondary battery may be 12 wt% to 29 wt%, 15 wt% to 25 wt%, or 19 wt% to 22 wt%.

When the first lithium transition metal oxide and the second lithium transition metal oxide fall within the above-described wt% range, the filling ratio of the cathode active material may be improved, thereby preventing degradation of initial capacity and cycle life characteristics of the lithium secondary battery.

In one embodiment, the lithium-sulfur-metal-containing part may include a compound including Li₂SO₄ and a metal element.

In one embodiment, the lithium-sulfur-metal-containing part includes at least one element selected from the group consisting of Al, Ti, Zr, W, Sr, Ba, Ta, Nb, Mo, K, B and Na.

For example, a metal element included in the lithium-sulfur-metal-containing part may include at least one element selected from the group consisting of Al, Ti, Zr, W, Sr, Ba, Ta, Nb, Mo, K, B and Na. For example, the metal element and a lithium-sulfur-metal-containing compound may be present together in the lithium-sulfur-metal-containing part.

In one embodiment, the lithium-sulfur-metal-containing part may include at least one selected from the group consisting of Li₂SO₄, Li(NH₄)SO₄, Li(N₂H₅)SO₄, LiNaSO₄, LiKSO₄, Li₂NaK(SO₄)₂, Li₂S₂O₆, Li₂Mg₂(SO₄)₃, LiB(SO4)₂, LiB(S₂O₇)₂, and Li₅B(SO₄)₄.

According to an embodiment, the cathode active material subjected to the above-described measurement method may be a cathode active material prepared by a preparation method to be described below.

**Hereinafter,** a method for preparing the above-described cathode active material for a lithium secondary battery will be described in detail.

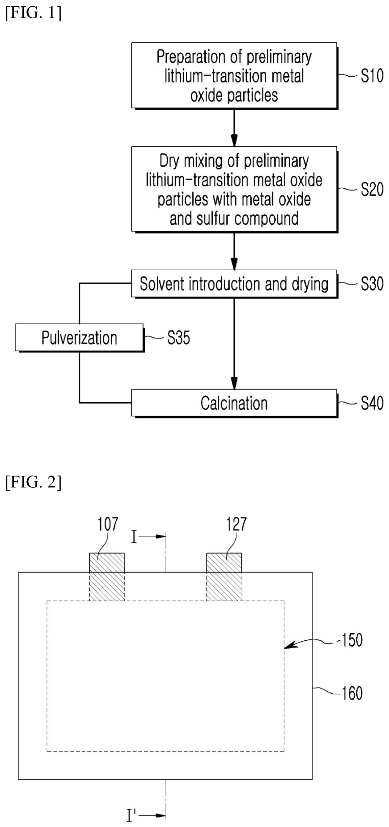

FIG. 1 is a process flowchart for describing the method for preparing a cathode active material according to exemplary embodiments.

Referring to FIG. 1, preliminary lithium transition metal oxide particles may be prepared (e.g., step S10).

For example, preliminary lithium transition metal oxide particles may be prepared through a reaction between a transition metal precursor containing nickel and a lithium precursor. The transition metal precursor (e.g., a Ni-Co-Mn precursor) may be prepared through a co-precipitation reaction.

For example, the transition metal precursor may be prepared through a co-precipitation reaction of metal salts. The metal salts may include nickel salts, manganese salts, and/or cobalt salts.

The nickel salts may include nickel sulfate, nickel hydroxide, nickel nitrate, nickel acetate, and hydrates thereof. These may be used alone or in combination of two or more thereof. For example, the nickel salt may be nickel sulfate.

Examples of the manganese salts may include manganese sulfate, manganese acetate, and hydrates thereof. These may be used alone or in combination of two or more thereof. For example, the manganese salt may be manganese sulfate.

Examples of the cobalt salts may include cobalt sulfate, cobalt nitrate, cobalt carbonate, and hydrates thereof. These may be used alone or in combination of two or more thereof. For example, the cobalt salt may be cobalt sulfate.

The metal salts may be mixed with a precipitant and/or chelating agent in a ratio that satisfies the content or concentration ratio of each metal described with reference to the formula, to prepare an aqueous solution. The aqueous solution may be co-precipitated in a reactor to prepare a transition metal precursor.

The precipitant may include an alkaline compound, such as sodium hydroxide (NaOH) or sodium carbonate (Na₂CO₃). For example, the precipitant may be sodium hydroxide.

The chelating agent may include, for example, ammonium hydroxide (e.g., NH₃·H₂O), ammonium carbonate (e.g., (NH₄)₂CO₃) and the like. For example, the chelating agent may be NH₃·H₂O.

For example, the co-precipitation reaction may be performed at a temperature of about 40 °C to 60 °C for about 24 hours to 72 hours.

The lithium precursor compound may include, for example, lithium carbonate, lithium nitrate, lithium acetate, lithium oxide, or lithium hydroxide. These may be used alone or in combination of two or more thereof.

The preliminary lithium transition metal oxide particles include two types of preliminary lithium transition metal oxide particles having different median particle diameters (D50).

In exemplary embodiments, the preliminary lithium transition metal oxide particles, a metal oxide, and a sulfur compound may be dry-mixed to form a mixture (e.g., step S20).

The dry mixing refers to mixing the preliminary lithium transition metal oxide particles, the metal oxide powder, and the sulfur compound powder without a solvent.

For example, the metal oxide may be provided as a metal source for the lithium-sulfur-metal-containing part, and the sulfur compound may be provided as a sulfur source for the lithium-sulfur-metal-containing part.

In some embodiments, the metal oxide may include at least one selected from the group consisting of Al₂O₃, TiO₂, Ti₂O₃, ZrO₂, B₂O₃, SrO₂, SrAl₂O₄, SrTiO₃, SrWO₄, BaO, WO₃, (NH₄)₁₀H₂(W₂O₇)₆, MgO, Ta₂O₅, Nb₂O₅, MoO₃, H₄[W₁₂SiO₄₀], H₄SiO₄·12MoO₃, and (NH₄)₂MoO₄.

In some embodiments, the amount of the metal oxide introduced may be 0.1 mol% to 1.0 mol% based on the total molar amount of the preliminary lithium transition metal oxide particles. For example, the amount of the metal oxide introduced may be 0.2 mol% to 0.9 mol%, 0.3 mol% to 0.8 mol%, or 0.35 mol% to 0.6 mol% based on the total molar amount of the preliminary lithium transition metal oxide particles. Within the above range, the output characteristics and capacity characteristics of the cathode active material may be improved.

In some embodiments, the sulfur compound may include a sulfonyl compound.

In some embodiments, the sulfur compound may include at least one selected from the group consisting of (NH₄)₂SO₄, HSO₃NH₂, NH₄SO₃NH₂, Al₂(SO₄)₃, AlK(SO₄)₂, Al(NH₄)(SO₄)₂, Ti(SO₄)₂, TiOSO₄, and SrSO₄. For example, the sulfur compound may be (NH₄)₂SO₄.

In some embodiments, the sulfur content of the sulfur compound may be 2,000 ppm to 4,000 ppm based on the total weight of a mixture obtained by dry-mixing the preliminary lithium transition metal oxide particles, the metal oxide, and the sulfur compound (hereinafter, also abbreviated as a "mixture"). For example, the sulfur content of the sulfur compound may be 2,100 ppm to 3,900 ppm, 2,200 ppm to 3,800 ppm, or 2,500 ppm to 3,500 ppm, based on the total weight of the mixture obtained by dry-mixing the preliminary lithium transition metal oxide particles, the metal oxide, and the sulfur compound. Within the above range, the lithium-sulfur-metal-containing part may be sufficiently formed, while capacity characteristics of the lithium secondary battery may be maintained or improved.

In exemplary embodiments, a solvent may be introduced to the mixture and then dried to form a preliminary lithium-sulfur-metal-containing part on the preliminary lithium transition metal oxide particles (e.g., step S30).

For example, the mixture may be introduced into a dryer, a solvent may be introduced, and vacuum drying may be performed to form the preliminary lithium-sulfur-metal-containing part on the preliminary lithium transition metal oxide particles. For example, solvent introduction and the vacuum drying may be performed simultaneously.

For example, the preliminary lithium-sulfur-metal-containing part may include substantially the same material as the lithium-sulfur-metal-containing part. The preliminary lithium-sulfur-metal-containing part may represent a state in which it is relatively unstably bonded between primary particles or on secondary particles of the preliminary lithium transition metal oxide particles before calcination.

For example, solvent introduction may be performed through pouring, dropping, spraying, or mist spraying.

For example, solvent introduction and drying may be performed in a vertical conical dryer (helical-type conical dryer), a horizontal conical dryer (shovel-type conical dryer), a vertical cylindrical dryer (helical-type cylindrical dryer) or the like.

In one embodiment, stirring may be performed together with the drying. For example, the mixture and the solvent may be dried while being stirred at a low speed (e.g., 100 rpm or less). Accordingly, cracking of the preliminary lithium transition metal oxide particles may be prevented, while the preliminary lithium-sulfur-metal-containing part may be uniformly formed on the preliminary lithium transition metal oxide particles.

After forming the mixture through dry mixing, a solvent may be introduced to the mixture and dried. Accordingly, agglomeration of the preliminary lithium transition metal oxide particles and the sulfur compound may be suppressed, while the lithium-sulfur-metal-containing part may be uniformly formed between the primary particles of the lithium transition metal oxide particles or on the surface of the secondary particles.

According to some embodiments, a water washing treatment in which an amount of water substantially identical or similar to that of the preliminary lithium transition metal oxide particles is added may be omitted. Accordingly, damage to or collapse of a layered structure of the primary particles may be prevented.

In some embodiments, the content of the solvent may be 2 wt% to 11 wt% based on the total weight of the mixture. For example, the content of the solvent may be 3 wt% to 10 wt%, 4 wt% to 9 wt%, or 4.5 wt% to 8 wt% based on the total weight of the mixture. Within the above range, impurities in the preliminary lithium transition metal oxide particles may be sufficiently removed, while preventing damage to or collapse of a layered structure of the primary particles, as may occur during a water washing process.

For example, the solvent may be pure water or ultrapure water.

In some embodiments, the drying may be performed at a temperature in a range of 110 °C to 240 °C. The temperature of the drying may refer to a temperature inside the dryer in which the drying is performed, rather than a temperature of a heat source of the dryer.

For example, the drying may be performed at a temperature in a range of 160 °C to 240 °C, 170 °C to 230 °C, or 180 °C to 240 °C.

Within the above range, drying of the solvent and formation of the preliminary lithium-sulfur-metal-containing part may be performed simultaneously, and the cycle life characteristics and output characteristics of the lithium secondary battery may be further improved.

For example, the sulfur compound and/or the metal oxide may react with residual lithium present on the surface of the preliminary lithium transition metal oxide particles and may be converted into the preliminary lithium-sulfur-metal-containing part. Accordingly, residual lithium on the surface of the lithium transition metal oxide particles may be reduced, and the cycle life characteristics and output characteristics of the lithium secondary battery may be improved.

In some embodiments, the mixture may be pulverized after drying and before calcination (e.g., step S35). Accordingly, agglomerates of the preliminary lithium transition metal oxide particles and the sulfur compound may be pulverized, and the cycle life characteristics of the lithium secondary battery may be further improved.

For example, the pulverization may be performed using a high-speed mixer, an air classifier mill (ACM), a disc mill or the like.

In exemplary embodiments, the preliminary lithium transition metal oxide particles on which the preliminary lithium-sulfur-metal-containing part is formed may be calcined at a temperature higher than a drying temperature to form lithium transition metal oxide particles including the lithium-sulfur-metal-containing part (e.g., step S40).

In some embodiments, the calcination may be performed at a temperature in a range of 300 °C to 500 °C.

For example, the calcination may be performed at a temperature in a range of 360 °C to 440 °C, 370 °C to 430 °C, or 380 °C to 440 °C.

When the calcination falls within the above-described range, the preliminary lithium-sulfur-metal-containing part is converted into a lithium-sulfur-metal-containing part between the primary particles of the lithium transition metal oxide particles or on the surface of the secondary particles, and may be stably disposed between the primary particles or on the secondary particles. Accordingly, the cycle life characteristics of the lithium secondary battery may be further improved.

In one embodiment, the calcination may be performed under an oxygen atmosphere.

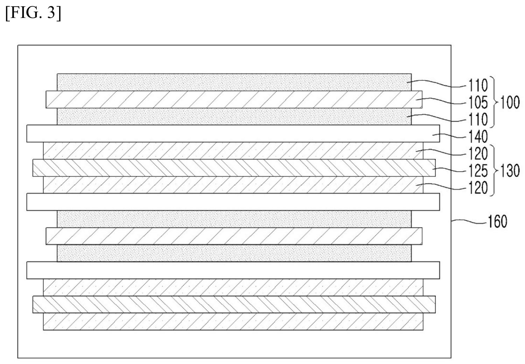

FIGS. 2 and 3 are a schematic plan view and a schematic cross-sectional view, respectively, illustrating a lithium secondary battery according to exemplary embodiments. For example, FIG. 3 is a cross-sectional view taken along line I-I' of FIG. 2 in the thickness direction.

Referring to FIGS. 2 and 3, the lithium secondary battery may include a cathode 100 including the above-described cathode active material for a lithium secondary battery and an anode 130 disposed opposite the cathode 100.

The cathode 100 may include a cathode active material layer 110 formed by applying the above-described cathode active material to at least one surface of a cathode current collector 105.

In one embodiment, the cathode current collector 105 may include stainless steel, nickel, aluminum, titanium, or an alloy thereof. The cathode current collector 105 may also include aluminum or stainless steel having a surface treated with carbon, nickel, titanium or silver. For example, the cathode current collector 105 may have a thickness of 10 µm to 50 µm.

**In** one embodiment, the cathode active material layer 110 may include the above-described cathode active material.

In one embodiment, the cathode active material may be substantially composed of the lithium transition metal oxide particles. For example, the cathode active material may be composed only of the first lithium transition metal oxide particles and the second lithium transition metal oxide particles.

The cathode active material may be mixed in a solvent to prepare a cathode slurry. The cathode slurry may be coated onto at least one surface of the cathode current collector 105, then dried and roll-pressed to prepare the cathode active material layer 110. The coating may include processes such as gravure coating, slot die coating, simultaneous multilayer die coating, imprinting, doctor blade coating, dip coating, bar coating or casting, etc. The cathode active material layer 110 may further include a binder, and optionally may further include a conductive material, a thickener or the like.

**As** the solvent, N-methyl-2-pyrrolidone (NMP), dimethylformamide, dimethylacetamide, N,N-dimethylaminopropylamine, ethylene oxide, tetrahydrofuran, and the like may be used.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In one embodiment, a PVDF-based binder may be used as the cathode binder. In this case, the amount of binder for forming the cathode active material layer 110 may be decreased and the amount of the cathode active material may be relatively increased. Accordingly, the output characteristics and capacity characteristics of the lithium secondary battery may be improved.

The conductive material may be added to the cathode active material layer 110 in order to enhance the conductivity thereof and/or the mobility of lithium ions or electrons. For example, the conductive material may include carbon-based conductive materials such as graphite, carbon black (e.g., Denka Black), acetylene black, Ketjen black, graphene, vapor-grown carbon fibers (VGCF), carbon nanotubes (CNTs), or carbon fibers; and/or metal-based conductive materials such as tin, tin oxide, and titanium oxide; as well as perovskite materials such as LaSrCoO₃, and LaSrMnO₃. These may be used alone or in combination of two or more thereof.

The cathode slurry may further include a thickener and/or a dispersant. In one embodiment, the cathode slurry may include a thickener such as carboxymethyl cellulose (CMC).

The anode 130 may include an anode current collector 125, and an anode active material layer 120 formed on at least one surface of the anode current collector 125.

For example, the anode current collector 125 may include a copper foil, nickel foil, stainless steel foil, titanium foil, nickel foam, copper foam, or a polymer substrate coated with a conductive metal. These may be used alone or in combination of two or more thereof. For example, the anode current collector 125 may have a thickness of 10 µm to 50 µm.

The anode active material layer 120 may include an anode active material. As the anode active material, a material capable of adsorbing and desorbing lithium ions may be used. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material, and the like may also be used. These may be used alone or in combination of two or more thereof.

The amorphous carbon may include hard carbon, soft carbon, coke, mesocarbon microbead (MCMB), mesophase pitch-based carbon fiber (MPCF) or the like.

The crystalline carbon may include graphite-based carbon such as natural graphite, artificial graphite, graphitized coke, graphitized MCMB, graphitized MPCF or the like.

The lithium metal may include pure lithium metal and/or lithium metal having a protective layer formed thereon for suppressing dendrite growth and the like. In one embodiment, a lithium metal-containing layer deposited or coated on the anode current collector 125 may be used as the anode active material layer 120. In one embodiment, a lithium thin-film layer may also be used as the anode active material layer 120.

Elements contained in the lithium alloy may include aluminum, zinc, bismuth, cadmium, antimony, silicon, lead, tin, gallium, indium, etc. These may be used alone or in combination of two or more thereof.

The silicon-containing material may provide further increased capacity characteristics. The silicon-containing material may include Si, SiOₓ (0<x<2), metal-doped SiOₓ (0<x<2), a silicon-carbon composite, etc.

The metal may include lithium and/or magnesium, and the metal-doped SiOₓ (0<x<2) may include a metal silicate.

The anode active material may be mixed in a solvent to prepare an anode slurry. The anode slurry may be coated or deposited on the anode current collector 125, and then dried and roll-pressed to prepare the anode active material layer 120. The coating may include processes such as gravure coating, slot die coating, simultaneous multilayer die coating, imprinting, doctor blade coating, dip coating, bar coating or casting or the like. The anode active material layer 120 may further include a binder, and optionally may further include a conductive material, a thickener or the like.

The solvent contained in the anode slurry may include water, pure water, deionized water, distilled water, ethanol, isopropanol, methanol, acetone, n-propanol, t-butanol and the like. These may be used alone or in combination of two or more thereof.

The above-described materials that can be used when preparing the cathode 100 as the binder, conductive material and thickener may also be used for the anode.

In some embodiments, a styrene-butadiene rubber (SBR)-based binder, carboxymethyl cellulose (CMC), polyacrylic acid-based binder, poly(3,4-ethylenedioxythiophene) (PEDOT)-based binder, and the like may be used as an anode binder. These may be used alone or in combination of two or more thereof.

In exemplary embodiments, a separator 140 may be interposed between the cathode 100 and the anode 130. The separator 140 may be configured to prevent an electrical short-circuit between the cathode 100 and the anode 130, and to allow the flow of ions. For example, the separator may have a thickness of 10 µm to 20 µm.

For example, the separator 140 may include a porous polymer film or a porous nonwoven fabric.

The porous polymer film may include a polyolefin-based polymer such as an ethylene polymer, propylene polymer, ethylene/butene copolymer, ethylene/hexene copolymer, or ethylene/methacrylate copolymer, etc. These may be used alone or in combination of two or more thereof.

The porous nonwoven fabric may include glass fibers having a high melting point, polyethylene terephthalate fibers, etc.

The separator 140 may also include a ceramic-based material. For example, inorganic particles may be coated on the polymer film or dispersed within the polymer film to improve heat resistance.

The separator 140 may have a single-layer or multilayer structure including the above-described polymer film and/or non-woven fabric.

According to exemplary embodiments, an electrode cell may be defined by the cathode 100, the anode 130 and the separator 140, and a plurality of electrode cells may be stacked to form, for example, a jelly roll type electrode assembly 150. For example, the electrode assembly 150 may be formed by winding, stacking, z-folding, or stack-folding the separator 140.

The electrode assembly 150 may be accommodated in a case 160 together with the electrolyte to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the like may be exemplified.

The organic solvent may include, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, γ-butyrolactone, propylene sulfite and the like. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluorophosphate, etc.

The borate compound may include lithium bis(oxalate) borate, etc.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode 100 and the anode 130 in place of the above-described separator 140.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These may be used alone or in combination of two or more thereof.

In one embodiment, the solid electrolyte may include an oxide-based amorphous solid electrolyte, such as, for example, Li₂O-B₂O₃-P₂O₅, Li₂O-SiO₂, Li₂O-B₂O₃, Li₂O-B₂O₃-ZnO, etc.

**As** shown in FIGS. 2 and 3, electrode tabs (cathode tabs and anode tabs) may protrude from the cathode current collector 105 and the anode current collector 125, respectively, which belong to respective electrode cells, and may extend to one side of the case 160. The electrode tabs may be welded together with the one side of the case 160 to form electrode leads (a cathode lead 107 and an anode lead 127) that extend or are exposed to the outside of the case 160.

The lithium secondary battery may be manufactured, for example, in a cylindrical, prismatic, pouch, or coin type using a can.
The invention is also defined by the following aspects:
Aspect 1. A cathode active material for a lithium secondary battery comprising first lithium transition metal oxide particles and second lithium transition metal oxide particles having a median particle diameter (D50) smaller than that of the first lithium transition metal oxide particles,
   wherein the first lithium transition metal oxide particles and the second lithium transition metal oxide particles each comprise a lithium-sulfur-metal-containing part and satisfy Equations 1 and 2 below: $5 A - 15 < B \left(%\right) < 5 A + 5$
   wherein in Equation 1, A denotes a ratio of the median particle diameter of the first lithium transition metal oxide particles to the median particle diameter of the second lithium transition metal oxide particles, and B denotes a difference in sulfur coating amount (%) defined by Equation 2 below $B = \left\{\left(Y-X\right)/X\right\} \times 100$
   wherein in Equation 2, X denotes a sulfur content (ppm) based on the total weight of the first lithium transition metal oxide particles, and Y denotes a sulfur content (ppm) based on the total weight of the second lithium transition metal oxide particles.
Aspect 2. The cathode active material according to aspect 1, wherein the sulfur content based on the total weight of the first lithium transition metal oxide particles is 3,000 ppm to 6,000 ppm, and the sulfur content based on the total weight of the second lithium transition metal oxide particles is 3,000 ppm to 6,000 ppm.
Aspect 3. The cathode active material according to aspect 1 or 2, wherein the median particle diameter (D50) of the first lithium transition metal oxide particles is greater than 10 µm and less than 18 µm.
Aspect 4. The cathode active material according to any one of aspect 1 to 3, The cathode active material for a lithium secondary battery according to claim 1, wherein the median particle diameter (D50) of the second lithium transition metal oxide particles is greater than 2 µm and less than 5 µm.
Aspect 5. The cathode active material according to any one of aspect 1 to 4, wherein the ratio (A) of the median particle diameter (D50) of the first lithium transition metal oxide particles to the median particle diameter (D50) of the second lithium transition metal oxide particles is 3.5 to 6.5.
Aspect 6. The cathode active material according to any one of aspect 1 to 5, wherein the first lithium transition metal oxide and the second lithium transition metal oxide are each represented by Formula 1 below:

   [Formula 1] LiₐNiₓM₁₋ₓO_{2+y}

   wherein in Formula 1, 0.95≤a≤1.08, x≥0.5, and -0.1≤y≤0.1, and M includes at least one element selected from S, Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Sr.
Aspect 7. The cathode active material according to any one of aspect 1 to 6, wherein the content of the first lithium transition metal oxide based on the total weight of the cathode active material for a lithium secondary battery is 70% by weight to 90% by weight.
Aspect 8. The cathode active material according to any one of aspect 1 to 7, wherein the content of the second lithium transition metal oxide based on the total weight of the cathode active material for a lithium secondary battery is 10% by weight to 30% by weight.
Aspect 9. The cathode active material according to any one of aspect 1 to 8, wherein the lithium-sulfur-metal-containing part comprises at least one selected from the group consisting of Al, Ti, Zr, W, Sr, Ba, Ta, Nb, Mo, K, B and Na.
Aspect 10. A lithium secondary battery comprising:
   a cathode comprising the cathode active material for a lithium secondary battery according to claim 1; and
   an anode disposed opposite the cathode.
Aspect 11. A method for preparing a cathode active material for a lithium secondary battery, the method comprising:
   preparing preliminary lithium transition metal oxide particles;
   dry mixing the preliminary lithium transition metal oxide particles, a metal oxide, and a sulfur compound to form a mixture;
   introducing a solvent to the mixture and drying to form a preliminary lithium-sulfur-metal-containing part on the preliminary lithium transition metal oxide particles; and
   calcining the preliminary lithium transition metal oxide particles on which the preliminary lithium-sulfur-metal-containing part is formed at a temperature higher than a drying temperature to form lithium transition metal oxide particles comprising a lithium-sulfur-metal-containing part.
Aspect 12. The method for preparing a cathode active material for a lithium secondary battery according to aspect 11, wherein the metal oxide comprises at least one selected from the group consisting of Al₂O₃, TiO₂, Ti₂O₃, ZrO₂, B₂O₃, SrO₂, SrAl₂O₄, SrTiO₃, SrWO₄, BaO, WO₃, (NH₄)₁₀H₂(W₂O₇)₆, MgO, Ta₂O₅, Nb₂O₅, MoO₃, H₄[W₁₂SiO₄₀], H₄SiO₄·12MoO₃, and (NH₄)₂MoO₄.
Aspect 13. The method for preparing a cathode active material for a lithium secondary battery according to aspect 11 or 12, wherein the sulfur compound comprises at least one selected from the group consisting of (NH₄)₂SO₄, HSO₃NH₂, NH₄SO₃NH₂, Al₂(SO₄)₃, AlK(SO₄)₂, Al(NH₄)(SO₄)₂, Ti(SO₄)₂, TiOSO₄, and SrSO₄.
Aspect 14. The method for preparing a cathode active material for a lithium secondary battery according to any one of aspect 11 to 13, wherein the drying is performed at a temperature in a range of 110 °C to 240 °C.
Aspect 15. The method for preparing a cathode active material for a lithium secondary battery according to any one of aspect 11 to 14, wherein the calcination is performed at a temperature in a range of 300 °C to 500 °C.

### Example 1

### (1) Preparation of Lithium Transition Metal Oxide Particles

### 1) Preparation of Preliminary Lithium Transition Metal Oxide Particles (S10)

NiSO₄, CoSO₄, and MnSO₄ were introduced and mixed at a molar ratio of 88:9:3 in distilled water from which dissolved oxygen had been removed by bubbling N₂ for 24 hours, to prepare a mixed solution. The mixed solution was introduced into a reactor at 55 °C, and NaOH and NH₃·H₂O were added as a precipitant and as a chelating agent, respectively. A co-precipitation reaction was performed for 48 hours to obtain Ni_{0.88}Co_{0.09}Mn_{0.03}(OH)₂ as a transition metal precursor having an average particle diameter of 17 *µ*m. The obtained precursor was dried at 80 °C for 12 hours and then further dried at 110 °C for 12 hours.Except the coprecipitation reaction time was changed to 18 hours, the reaction was carried out in the same manner as described above to obtain a transition metal precursor having an average particle diameter of 3 µm.

After obtaining precursors having median particle diameters (D50) of 17 µm and 3 µm, respectively, in the above-described manner, the weight ratio of the precursor having a median particle diameter (D50) of 17 µm to the precursor having a median particle diameter (D50) of 3 µm was adjusted to 80:20, and the molar ratio of lithium oxide to the transition metal precursor was adjusted to 1.01:1, and the precursors were added to a dry high-speed mixer and uniformly mixed for 5 minutes. The mixture was introduced into a calcination furnace and heated to 700 °C to 720 °C at a heating rate of 2 °C/min, and maintained at 700 °C to 720 °C for 10 hours. Oxygen was continuously supplied at a flow rate of 20 L/min during the heating and calcination. After completion of the calcination, the mixture was naturally cooled to room temperature, then pulverized and classified to obtain the mixed powder of preliminary lithium transition metal oxide particles in the form of secondary particles having different median particle diameters (D50) with a composition of LiNi_{0.88}Co_{0.09}Mn_{0.03}O₂. Even after the pulverization and classification, the average particle diameter at the time of mixing the transition metal precursors was maintained unchanged.

### 2) Formation of Mixture (S20)

The mixture of two types of the preliminary lithium transition metal oxide particles having different median particle diameters (D50), Al₂O₃ powder and WO₃ powder as metal oxides, and (NH₄)₂SO₄ powder as a sulfur compound were dry-mixed to form a mixture.

The contents of Al₂O₃ and WO₃ were each 0.20 mol% (total metal oxide content: 0.40 mol%) based on the total molar amount of the preliminary lithium transition metal oxide particles. The amount of (NH₄)₂SO₄ introduced was adjusted so that the sulfur content of the sulfur compound was 3,000 ppm based on the total weight of the mixture.

### 3) Solvent Introduction and Drying (S30)

The mixture was introduced into a vertical conical dryer with a heat-activated oil heating system (OKAWARA MFG, Model: RM-25VD-SR). Pure water in an amount of 5 wt% based on the total weight of the mixture was added to the dryer and vacuum dried to form a preliminary lithium-sulfur-metal-containing part on the preliminary lithium transition metal oxide particles. The internal temperature (drying temperature) of the dryer was adjusted to 170 °C. The internal temperature of the dryer was measured by installing a thermometer inside the dryer.

Specifically, the vacuum drying was performed under the following conditions.
- Heat source temperature: 200 °C
- Dryer internal temperature (drying temperature): 170 °C
- Drying time: 6 hours
- Reactor size: 25 L
- Amount of mixture introduced: 30 kg
- Stirring linear speed: 2 m/s
- Solvent introduction rate: 0.5 L/min
- Solvent temperature: 30 °C

### 4) Pulverization (S35)

The preliminary lithium transition metal oxide particles, in which the preliminary lithium-sulfur-metal-containing part was formed, were introduced into a high-speed mixer (Nippon Coke & Engineering, Model: FM20C/I) and pulverized.

Specifically, the pulverization was performed under the following conditions.
- Mixer reactor size: 20 L
- Amount of preliminary lithium transition metal oxide particles introduced: 15 kg
- Mixer reactor temperature: maintained at room temperature using cooling water
- Lower blade: standard-type blade
- Upper blade: grinding-type blade
- Pulverization speed: 700 rpm
- Pulverization time: 20 minutes

### 5) Calcination (S40)

The preliminary lithium transition metal oxide particles, in which the preliminary lithium-sulfur-metal-containing part was formed, were introduced into a calcination furnace. While supplying oxygen at a flow rate of 20 L/min, the temperature was increased to 400 °C at a heating rate of 2 °C/min, and maintained at 400 °C for 10 hours. The calcined product was classified using a 325-mesh sieve to obtain first lithium transition metal oxide particles and second lithium transition metal oxide particles.

### (2) Manufacture of Lithium Half-Battery

A lithium half-battery was manufactured using the first lithium transition metal oxide particles and the second lithium transition metal oxide particles as a cathode active material.

Specifically, the cathode active material, Denka Black as a conductive material, and PVDF as a binder were mixed at a mass ratio of 93:5:2 to prepare a cathode slurry. The cathode slurry was then applied onto an aluminum current collector, and then dried and roll-pressed to fabricate a cathode. After the roll-pressing, the density of the cathode was adjusted to 3.3 g/cm³.

### Lithium metal was used as an anode.

The cathode and anode prepared as described above were each notched into circular shapes having diameters of Φ14 and Φ16, respectively, and stacked with a separator (polyethylene, thickness: 13 µm) notched into Φ19 interposed between the cathode and the anode to form an electrode cell. ΦN (N is a positive number) may denote a circular shape having a diameter of N mm.

The electrode cell was placed in a coin cell outer case of standard (CR2032) having a diameter of 20 mm and a height of 3.2 mm, followed by electrolyte injection and assembly. Thereafter, aging was carried out for 12 hours or more to allow the electrolyte to be impregnated into the electrode.

A 1 M LiPF₆ solution prepared using a mixed solvent of EC/EMC (30/70; volume ratio) was used as the electrolyte. Formation charging and discharging were performed on the lithium half-battery manufactured as described above (charging conditions: CC-CV 0.1C, 4.3 V, 0.005C cut-off; discharging conditions: CC 0.1C, 3.0 V cut-off).

### (3) Manufacture of Lithium Secondary Battery

A lithium secondary battery was manufactured using the first lithium transition metal oxide particles and the second lithium transition metal oxide particles as a cathode active material.

Specifically, a cathode slurry was prepared by mixing the cathode active material, Denka Black and CNTs as conductive materials, and PVDF as a binder at a mass ratio of 97.7:0.4:0.6:1.3. The cathode slurry was then applied onto an aluminum current collector, and then dried and roll-pressed to fabricate a cathode. After the roll-pressing, the density of the cathode was adjusted to 3.69 g/cm³.

An anode slurry, which included a mixture of 47.25 wt% of natural graphite and 47.25 wt% of artificial graphite as anode active materials, 3 wt% of flake-type graphite (KS6) as a conductive material, 1.2 wt% styrene-butadiene rubber (SBR) as a binder, and 1.3 wt% carboxymethyl cellulose (CMC) as a thickener, was prepared. The anode slurry was coated onto a copper substrate, and then dried and roll-pressed to fabricate an anode.

Fourteen cathodes and fifteen anodes were notched to a predetermined size and stacked, then an electrode cell was fabricated by interposing a separator (polyethylene, thickness: 25 µm) between the cathode and the anode. Thereafter, tab parts of the cathode and the anode were welded, respectively. The assembly of the welded cathode/separator/anode was placed into a pouch, and three sides of the pouch were sealed, leaving one side open for electrolyte injection. At this time, the portion having the electrode tab was included in the sealed part. After injecting the electrolyte through the electrolyte injection side, the remaining electrolyte injection side was also sealed, and the cell was allowed to be impregnated for 12 hours or more.

A solution, prepared by dissolving a 1M LiPF₆ solution in a mixed solvent of EC/EMC (25/75; volume ratio), and further adding 1 wt% of vinylene carbonate (VC), and 0.5 wt% of 1,3-propenesultone (PRS) based on the total weight of the solution, was used as the electrolyte.

### Examples 2 to 8 and Comparative Examples 1 to 4

Cathode active materials, lithium half-cells, and lithium secondary batteries were manufactured in the same manner as in Example 1, except that, in the step of preparing the preliminary lithium transition metal oxide particles (S10), the coprecipitation reaction time during formation of the transition metal precursors was adjusted such that the average particle diameters (D50) of the first lithium transition metal oxide particles and the second lithium transition metal oxide particles were as shown in Table 2 below. In addition, in the step of forming the mixture (S20), the amount of the sulfur compound introduced was adjusted such that the sulfur content based on the total weight of the first lithium transition metal oxide particles and the sulfur content based on the total weight of the second lithium transition metal oxide particles were as shown in Table 1 below. Except for these conditions, the procedures were the same as those of Example 1.

### Experimental Example

### (1) Measurement of Median Particle Diameter (D50) of Lithium Transition Metal Oxide Particles

The particle diameter was measured using a laser diffraction method. Specifically, the cathode active material particles were dispersed in a dispersion medium and then introduced into a commercially available laser diffraction particle size analyzer (e.g., Microtrac MT 3500), and the particle size distribution was calculated by measuring differences in diffraction patterns according to particle size as the particles pass through a laser beam. The median particle diameter was determined using the D50 value from the volume distribution of the active material, and the results are shown in Table 2.

In Table 2, A denotes a ratio of the median particle diameter (D50) of the first lithium transition metal oxide particles to the median particle diameter (D50) of the second lithium transition metal oxide particles.

### (2) Measurement of Sulfur (S) Content

The sulfur content based on the total weight of the lithium transition metal oxide particles prepared according to the above-described examples and comparative examples was measured using a CS (carbon/sulfur) analyzer (CS844, manufactured by LECO).

Specifically, cathode active material particles were divided into small portions of 0.02 g to 0.04 g and introduced into a ceramic crucible, and a combustion aid (LECOCEL II) and iron chips were added to the ceramic crucible at a mass ratio of 1:1.

The ceramic crucible was placed in a high-frequency induction furnace, and combustion was performed at 2,600 °C to 2,700 °C while oxygen was supplied at a flow rate of 3 L/min.

Sulfur-containing inorganic compound gas (e.g., SO₂ gas) generated during the combustion was passed through an infrared detection cell, and a change in infrared absorption relative to a blank was measured to determine the sulfur content based on the total weight of the lithium transition metal oxide particles. The measurement results are shown in Table 2.

### (3) Measurement of Difference in Sulfur (S) Coating Amount Between First Lithium Transition Metal Oxide Particles and Second Lithium Transition Metal Oxide Particles

In order to separate particle diameters of the first lithium transition metal oxide particles and the second lithium transition metal oxide particles, classification was performed using a sieve having an opening size corresponding to an intermediate value between the two median particle diameters (D50). For example, to separate a large particle diameter of 17 µm and a small particle diameter of 3 µm, classification was performed using a sieve having an opening size of 10 µm (1,250 mesh), and sulfur contents of a material remaining on an upper side of the sieve (X) and a material passing through the sieve (Y) were measured using the C/S analyzer, and the results are shown in Table 1. Then, a difference in sulfur (S) coating amount (B), which is defined as sulfur content (Y) based on the total weight of the second lithium transition metal oxide particles relative to sulfur content (X) based on the total weight of the first lithium transition metal oxide particles, was calculated according to Equation 2 below, and the results are shown in Table 2.$B = \left\{\left(Y-X\right)/X\right\} \times 100$

Based on the values of A and B calculated above, it was evaluated whether the cathode active materials according to the examples and comparative examples satisfied Equation 1 below, and the results are shown in Table 2.$5 A - 15 < B \left(%\right) < 5 A + 5$

### (4) Measurement of Residual Lithium (Li₂CO₃) Content

The Li₂CO₃ content based on the total weight of the lithium transition metal oxide particles prepared according to the above-described examples and comparative examples was measured using a CS (carbon/sulfur) analyzer (CS844, manufactured by LECO).

Specifically, 1 g of a cathode active material sample was combusted, and carbon content in the sample was measured by detecting CO₂ generated therefrom. The Li₂CO₃ content was calculated by considering atomic weights of lithium, carbon, and oxygen, and the results are shown in Table 2.

### (5) Evaluation of Initial Discharge Capacity

The lithium half-batteries manufactured according to the above-described examples and comparative examples were charged (CC-CV 0.1C, 4.3 V, 0.005C cut-off) in a 25 °C chamber and then discharged (CC 0.1C, 3.0 V cut-off). The battery capacity (initial discharge capacity) was measured, and the results are shown in Table 3.

### (6) Evaluation of High-Temperature Capacity Retention (41 °C, 800 cycles)

Lithium secondary batteries according to the examples and comparative examples were placed in a chamber maintained at 41 °C and charged (CC-CV 0.66C, 4.2 V, 0.1C cut-off) and discharged (CC 0.66C, 2.5 V cut-off) to measure the discharge capacity.

The lithium secondary battery was recharged (CC-CV, 0.66C, 4.2 V, 0.1C cut-off) and then discharged by 3% DOD to prepare a battery at an SOC of 97%.

Based on the measured discharge capacity, the cut-off voltage at a cut-off current of 0.1C was determined so as to correspond to the point in time corresponding to an SOC of 97% under a cut-off current condition of 0.05C.The cut-off voltage was determined to be 4.155 V to 4.175 V.

The lithium secondary batteries were subjected to 800 cycles of charging (CC-CV 0.66C, 4.155 V to 4.175 V, 0.1C cut-off) and discharging (CC 0.66C, 2.5 V cut-off). The high-temperature capacity retention was evaluated by dividing the discharge capacity at the 800th cycle by the discharge capacity at the first cycle and multiplying the resulting value by 100. The evaluation results are shown in Table 3.

### (7) Measurement of High-Temperature Gas Generation

The 97% SOC battery prepared in Experimental Example (6) was placed in a chamber maintained at 60 °C and left to stand for 16 weeks, and gas generation was measured.

Specifically, the battery was placed in a jig designed to fit the size of the battery, and a pin was inserted through the jig. A pressure change within the jig was measured and converted into a gas generation amount, and the results are shown in Table 3.

### (8) Evaluation of Room-Temperature Constant Power

Constant power evaluation was conducted using the lithium secondary batteries according to the examples and comparative examples. A battery having an SOC of 15% was discharged at 25 °C at a constant power (CP) of 380 W, and a time until the voltage dropped to 2.5 V was measured. The results are shown in Table 3.

**[TABLE 1]**

| | sulfur content based on the total weight of the first lithium transition metal oxide particles (X) | sulfur content based on the total weight of the second lithium transition metal oxide particles (Y) |
|---|---|---|
| Example 1 | 3780 | 4540 |
| Example 2 | 3760 | 4890 |
| Example 3 | 3730 | 4480 |
| Example 4 | 3760 | 4140 |
| Example 5 | 3710 | 4450 |
| Example 6 | 3810 | 4010 |
| Example 7 | 3690 | 4060 |
| Example 8 | 3770 | 4530 |
| Comparative Example 1 | 3720 | 4840 |
| Comparative Example 2 | 3750 | 5250 |
| Comparative Example 3 | 3780 | 4920 |
| Comparative Example 4 | 3700 | 5180 |

**[TABLE 2]**

| | Median particle diameter (D50) of first lithium transition metal oxide particles (µm) | Median particle diameter (D50) of second lithium transition metal oxide particles (µm) | A | B | Whether Equation 1 is satisfied | Residual lithium content (ppm) |
|---|---|---|---|---|---|---|
| Example 1 | 17 | 3 | 5.7 | 20 | O | 6150 |
| Example 2 | 17 | 3 | 5.7 | 30 | O | 5630 |
| Example 3 | 17 | 4 | 4.3 | 20 | O | 6090 |
| Example 4 | 13 | 3 | 4.3 | 10 | O | 6210 |
| Example 5 | 13 | 3 | 4.3 | 20 | O | 5900 |
| Example 6 | 11 | 3 | 3.7 | 5 | O | 6360 |
| Example 7 | 11 | 3 | 3.7 | 10 | O | 6210 |
| Example 8 | 11 | 3 | 3.7 | 20 | O | 5900 |
| Comparative Example 1 | 13 | 3 | 4.3 | 30 | X | 5370 |
| Comparative Example 2 | 13 | 3 | 4.3 | 40 | X | 4880 |
| Comparative Example 3 | 11 | 3 | 3.7 | 30 | X | 5370 |
| Comparative Example 4 | 11 | 3 | 3.7 | 40 | X | 4880 |

In Table 2, A denotes the ratio of the median particle diameter (D50) of the first lithium transition metal oxide particles to the median particle diameter (D50) of the second lithium transition metal oxide particles, and B denotes the difference in sulfur coating amount (%) defined by Equation 2.

**[TABLE 3]**

| | Initial discharge capacity (mAh/g) | High-temperature capacity retention (%, 41 °C, 800 cycles) | High-temperature gas generation (mL, 60°C, 16 weeks) | Room-temperature constant power (s) |
|---|---|---|---|---|
| Example 1 | 214 | 88 | 31 | 17 |
| Example 2 | 212 | 90 | 32 | 17 |
| Example 3 | 213 | 91 | 29 | 17 |
| Example 4 | 216 | 86 | 35 | 21 |
| Example 5 | 215 | 87 | 34 | 18 |
| Example 6 | 214 | 85 | 40 | 19 |
| Example 7 | 213 | 87 | 36 | 18 |
| Example 8 | 213 | 90 | 35 | 17 |
| Comparative Example 1 | 210 | 88 | 35 | 13 |
| Comparative Example 2 | 208 | 88 | 33 | 12 |
| Comparative Example 3 | 210 | 86 | 35 | 14 |
| Comparative Example 4 | 209 | 86 | 37 | 14 |

Referring to Tables 2 and 3, the examples satisfying Equations 1 and 2 exhibit superior electrochemical performance of lithium secondary batteries compared to the comparative examples that do not satisfy Equations 1 and 2. In particular, it is confirmed that the initial discharge capacity and room-temperature constant power are improved.

In the comparative examples, the second lithium transition metal oxide particles are coated with an excessive amount of sulfur, which significantly reduces residual lithium, but also significantly decreases the initial discharge capacity and room-temperature constant power.

## Claims

1. A cathode active material for a lithium secondary battery comprising first lithium transition metal oxide particles and second lithium transition metal oxide particles having a median particle diameter (D50) smaller than that of the first lithium transition metal oxide particles,
wherein the first lithium transition metal oxide particles and the second lithium transition metal oxide particles each comprise a lithium-sulfur-metal-containing part and satisfy Equations 1 and 2 below: $5 A - 15 < B \left(%\right) < 5 A + 5$
wherein in Equation 1, A denotes a ratio of the median particle diameter of the first lithium transition metal oxide particles to the median particle diameter of the second lithium transition metal oxide particles, and B denotes a difference in sulfur coating amount (%) defined by Equation 2 below, $B = \left\{\left(Y-X\right)/X\right\} \times 100$
wherein in Equation 2, X denotes a sulfur content (ppm) based on the total weight of the first lithium transition metal oxide particles, and Y denotes a sulfur content (ppm) based on the total weight of the second lithium transition metal oxide particles.

2. The cathode active material for a lithium secondary battery according to claim 1, wherein the sulfur content based on the total weight of the first lithium transition metal oxide particles is 3,000 ppm to 6,000 ppm, and the sulfur content based on the total weight of the second lithium transition metal oxide particles is 3,000 ppm to 6,000 ppm.

3. The cathode active material for a lithium secondary battery according to claim 1 or 2, wherein the median particle diameter (D50) of the first lithium transition metal oxide particles is greater than 10 µm and less than 18 µm.

4. The cathode active material for a lithium secondary battery according to any one of claims 1 to 3, wherein the median particle diameter (D50) of the second lithium transition metal oxide particles is greater than 2 µm and less than 5 µm.

5. The cathode active material for a lithium secondary battery according to any one of claims 1 to 4, wherein the ratio (A) of the median particle diameter (D50) of the first lithium transition metal oxide particles to the median particle diameter (D50) of the second lithium transition metal oxide particles is 3.5 to 6.5.

6. The cathode active material for a lithium secondary battery according to any one of claims 1 to 5, wherein the first lithium transition metal oxide and the second lithium transition metal oxide are each represented by Formula 1 below:
[Formula 1] LiₐNiₓM₁₋ₓO_{2+y}
wherein in Formula 1, 0.95≤a≤1.08, x≥0.5, and -0.1≤y≤0.1, and M includes at least one element selected from S, Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Sr.

7. The cathode active material for a lithium secondary battery according to any one of claims 1 to 6, wherein the content of the first lithium transition metal oxide based on the total weight of the cathode active material for a lithium secondary battery is 70% by weight to 90% by weight.

8. The cathode active material for a lithium secondary battery according to any one of claims 1 to 7, wherein the content of the second lithium transition metal oxide based on the total weight of the cathode active material for a lithium secondary battery is 10% by weight to 30% by weight.

9. The cathode active material for a lithium secondary battery according to any one of claims 1 to 8, wherein the lithium-sulfur-metal-containing part comprises at least one selected from the group consisting of Al, Ti, Zr, W, Sr, Ba, Ta, Nb, Mo, K, B and Na.

10. A lithium secondary battery comprising:
a cathode comprising the cathode active material for a lithium secondary battery according to claim 1; and
an anode disposed opposite the cathode.

11. A method for preparing a cathode active material for a lithium secondary battery, the method comprising:
preparing preliminary lithium transition metal oxide particles;
dry mixing the preliminary lithium transition metal oxide particles, a metal oxide, and a sulfur compound to form a mixture;
introducing a solvent to the mixture and drying to form a preliminary lithium-sulfur-metal-containing part on the preliminary lithium transition metal oxide particles; and
calcining the preliminary lithium transition metal oxide particles on which the preliminary lithium-sulfur-metal-containing part is formed at a temperature higher than a drying temperature to form lithium transition metal oxide particles comprising a lithium-sulfur-metal-containing part.

12. The method according to claim 11, wherein the metal oxide comprises at least one selected from the group consisting of Al₂O₃, TiO₂, Ti₂O₃, ZrO₂, B₂O₃, SrO₂, SrAl₂O₄, SrTiO₃, SrWO₄, BaO, WO₃, (NH₄)₁₀H₂(W₂O₇)₆, MgO, Ta₂O₅, Nb₂O₅, MoO₃, H₄[W₁₂SiO₄₀], H₄SiO₄·12MoO₃, and (NH₄)₂MoO₄.

13. The method according to claim 11 or 12, wherein the sulfur compound comprises at least one selected from the group consisting of (NH₄)₂SO₄, HSO₃NH₂, NH₄SO₃NH₂, Al₂(SO₄)₃, AlK(SO₄)₂, Al(NH₄)(SO₄)₂, Ti(SO₄)₂, TiOSO₄, and SrSO₄.

14. The method according to any one of claims 11 to 13, wherein the drying is performed at a temperature in a range of 110 °C to 240 °C.

15. The method according to any one of claims 11 to 14, wherein the calcination is performed at a temperature in a range of 300 °C to 500 °C.
